# DEMANDE DE BREVET EUROPEEN

(11) **EP 4 588 334 A1**
(43) Date de publication de la demande: **23.07.2025**
(21) Numéro de dépôt: 25152683.6
(22) Date de dépôt: 17.01.2025
(51) Int. Cl.: A01D 87/12

(54) **MACHINE DE DEROULAGE D'UNE BALLE AGRICOLE OBTENUE PAR ENROULEMENT EN SPIRALE D'UNE NAPPE CONTINUE DE TIGES VEGETALES**

(30) Priorité: 18.01.2024 FR 2400482
(71) Demandeur: N.V. Depoortere, 8791 Beveren-Leie (BE)
(72) Inventeur: DEPOORTERE, Rik, 8908 VLAMERTINGE (BE); CLAERBOUT, Valentin, 8500 KORTRIJK (BE)
(74) Mandataire: Cabinet Beau de Loménie

(57) **Abrégé**

L'invention concerne une machine de déroulage d'une balle agricole obtenue par enroulement en spirale d'une nappe continue de tiges végétales préalablement prélevée sur le sol. La machine est configurée pour détacher une nappe continue de tiges végétales du reste de la spirale, et comporte : des moyens de mise en rotation de la spirale ; des premiers moyens de maintien de la nappe continue de tiges végétales, pour acheminer la nappe continue vers un ou plusieurs moyens de traitement, les premiers moyens de maintien étant configurés pour venir en contact avec au moins une partie de la surface de la nappe continue exposée par la séparation entre la nappe continue et le reste de la spirale ; et des deuxièmes moyens de maintien du reste de la spirale configurés pour venir en contact avec au moins une partie de la surface du reste de la spirale exposée par la séparation de la nappe continue.

Un point de séparation entre la nappe continue et le reste de la spirale est positionné, dans le sens de déplacement des tiges du reste de la spirale et de la nappe continue, en amont desdits premiers et deuxièmes moyens de maintien.

## Description

### Domaine Technique

La présente invention concerne le domaine du traitement de tiges végétales, telles le lin ou le chanvre. L'invention concerne plus spécifiquement le domaine du déroulage d'une nappe continue de tiges végétales enroulée en spirale sous la forme d'une balle agricole, en vue d'en permettre son traitement, notamment son teillage.

### Technique antérieure

Il est connu d'utiliser, de stocker et de transporter des tiges végétales sous forme de balles agricoles. De telles balles permettent une manipulation facilitée des tiges végétales, notamment d'une nappe continue de tiges végétales, tout en permettant leur déroulage une fois sur le site de destination.

Lorsque les tiges végétales sont sous forme de nappe continue, la balle agricole est alors formée par enroulement et compression de la nappe continue sur elle-même, sous la forme d'une spirale.

Par ailleurs, lors de l'enroulement de la nappe continue sur elle-même, une ou plusieurs ficelles peuvent être insérées entre les différentes couches superposées de la spirale ainsi formée, afin de faciliter notamment le déroulage de la balle.

Par exemple, on connaît par le document FR.2.383.598 la mise en balles d'andains de tiges de lin, consistant à enrouler sur elle-même une nappe continue d'andains juxtaposés transversalement à la direction de l'enroulement. Cette technique de mise en balles découle de la confection des balles de paille par des presses enrouleuses.

Dans la demande FR 2 767 842, le but est de proposer un dispositif d'alimentation automatique d'une nappe de tiges dans une presse enrouleuse ou autre système d'emballage.

Cependant, lors de la constitution de la balle agricole, l'andain se trouve généralement sur le sol et est ramassé par l'enrouleuse (parfois appelée « round baler ») sous forme de nappe continue de tiges végétales, afin de former la spirale. Ainsi, il est fréquent que des poussières, telles que de la terre et particules présentes sur ou dans l'andain, ou bien à la surface du sol sur lequel repose l'andain, soient entraînées par l'andain lors de son ramassage et stockées avec les tiges végétales dans la balle agricole.

De telles poussières sont particulièrement problématiques lors du déroulage de la balle agricole. En effet, elles se retrouvent libérées lors du déroulage de la spirale et souvent mises en suspension dans l'air sous l'effet de l'action mécanique de déroulage de la nappe continue de tiges végétales, ce qui est gênant, voire potentiellement dangereux si les concentrations dépassent les valeurs règlementaires, pour les personnes présentes au contact des tiges végétales.

Lors du déroulage de la balle agricole en une nappe continue, deux difficultés peuvent apparaître : d'une part la séparation entre la nappe continue et le reste de la balle agricole peut s'avérer compliquée en raison de l'entremêlement des tiges de lin entre elles ; d'autre part, la surface extérieure de la balle agricole peut se désagréger en partie sous l'effet de la gravité, et créé ainsi un paquet.

Les ficelles utilisées lors de la formation de la balle agricole permettent de limiter de telles difficultés lors de déroulage, mais la présence d'un opérateur reste nécessaire pour intervenir lorsque les ficelles ne remplissent pas complètement leur fonction ou bien sont mal positionnées pour agir correctement.

La présence de poussières dans les balles agricoles de tiges végétales, et notamment au sein même de la nappe continue de tiges végétales formant les balles agricoles, est donc problématique et contraignante pour les personnes travaillant sur les étapes ultérieures de traitement appliquées auxdites balles agricoles.

### Exposé de l'invention

La présente invention vise à résoudre les différents problèmes techniques énoncés précédemment. En particulier, la présente invention vise à proposer une machine permettant de limiter l'exposition aux poussières, pour les personnes travaillant dans le domaine du traitement de tiges végétales, notamment sous forme de nappe continue, conditionnées sous forme de balles agricoles. Plus précisément, la présente invention vise à proposer une machine de déroulage permettant de limiter l'exposition des personnes participant au déroulage de la balle agricole, aux poussières présentes dans la balle agricole et libérées lors de son déroulage.

Ainsi, selon un aspect, il est proposé une machine de déroulage d'une balle agricole obtenue par enroulement en spirale d'une nappe continue de tiges végétales préalablement prélevée sur le sol. La machine est configurée pour détacher une nappe continue de tiges végétales du reste de la spirale, et comporte : des moyens de mise en rotation de la spirale autour d'une direction sensiblement parallèle à un axe de la spirale, par exemple un tapis porteur ; des premiers moyens de maintien de la nappe continue de tiges végétales, pour acheminer la nappe continue vers un ou plusieurs moyens de traitement, les premiers moyens de maintien étant configurés pour venir en contact avec au moins une partie de la surface de la nappe continue exposée par la séparation entre la nappe continue et le reste de la spirale ; et des deuxièmes moyens de maintien du reste de la spirale, pour maintenir le reste de la spirale, notamment sur les moyens de mise en rotation.

Les deuxièmes moyens de maintien sont configurés pour venir en contact avec au moins une partie de la surface du reste de la spirale exposée par la séparation de la nappe continue.

Un point de séparation entre la nappe continue et le reste de la spirale est positionné, dans le sens de déplacement des tiges du reste de la spirale et de la nappe continue, en amont desdits premiers et deuxièmes moyens de maintien. Dit autrement, le point de séparation est positionné, dans le sens de déplacement des tiges du reste de la spirale et de la nappe continue, entre lesdits moyens de mise en rotation de la spirale et lesdits premiers et deuxièmes moyens de maintien.

Ainsi, la machine de déroulage selon la présente invention est configurée pour pouvoir dérouler la balle agricole tout en maintenant le reste de la spirale, de manière autonome, pour permettre une présence à distance d'éventuels opérateurs. Ainsi, une fois le déroulage de la balle agricole amorcé, et la nappe continue positionnée en prise avec les premiers moyens de maintien de la nappe continue, ce qui peut être réalisé par un opérateur présent au niveau de la machine, la machine peut dérouler le reste de la spirale seule en nécessitant peu ou pas d'intervention d'opérateurs à proximité. En particulier, la machine selon la présente invention, comprend d'une part des premiers moyens de maintien de la nappe continue, et d'autre part des deuxièmes moyens de maintien du reste de la spirale, configurés pour venir maintenir les surfaces respectives de la nappe continue et du reste de la spirale qui ont été exposées par le déroulage de la balle agricole. Les premiers et deuxièmes moyens de maintien permettent ainsi d'une part de garantir un détachement entre la nappe continue et la spirale, et d'autre part de maintenir les tiges ensemble à la fois au niveau de la nappe continue détachée, et au niveau du reste de la spirale, durant le déroulage. Dit autrement, la machine selon la présente invention permet de limiter la libération, ou sortie, non-souhaitée de tiges de la nappe continue ou du reste de la spirale, pendant toute la durée du déroulage de la balle agricole, ce qui permet donc aux opérateurs présents de ne pas avoir à rester à proximité de la spirale, et donc de ne pas être exposés aux poussières libérées lors du déroulage. Une telle machine de déroulage nécessite donc moins d'opérateurs présents pour fonctionner en continue, et le ou les opérateurs présents peuvent rester à distance de la machine, et notamment protégés des poussières libérées lors du fonctionnement de la machine, par exemple dans un espace isolé de celui de la machine.

Préférentiellement, les deuxièmes moyens de maintien sont synchronisés avec les moyens de mise en rotation de la spirale. En particulier, les deuxièmes moyens de maintien peuvent être entraînés en rotation.

Afin de coordonner les différentes actions de la machine de déroulage, et permettre notamment une réalisation simultanée des différentes fonctions, à savoir l'entraînement en rotation de la spirale, la séparation de la nappe continue et le maintien de la spirale restante, la machine de déroulage peut comporter différents moyens qui sont synchronisés entre eux. Il est alors possible de limiter les contraintes au sein de la spirale et/ou de la nappe continue, ce qui pourrait conduire à des mouvements brusques de la nappe, et donc à une libération plus importante de poussières, voire à des ruptures de la nappe continue.

Préférentiellement, la machine comprend également des moyens d'aide à la séparation, montés, dans le sens de déplacement des tiges du reste de la spirale et de la nappe continue, entre le point de séparation et les premiers et deuxièmes moyens de maintien, par exemple entre les premiers moyens de maintien et les deuxièmes moyens de maintien.

Afin de faciliter la séparation entre la nappe continue et le reste de la spirale, des moyens d'aide sont prévus pour faciliter la séparation des éventuelles tiges végétales de la nappe continue qui seraient restées entremêlées avec des tiges végétales de la spirale restante. Les moyens d'aide permettent d'augmenter l'efficacité de séparation de la machine de déroulage, et donc de limiter les interventions humaines en cas de blocage ou bourrage au niveau de la machine. De préférence, les moyens d'aide sont prévus, dans le sens de déplacement des tiges du reste de la spirale, en amont des deuxièmes moyens de maintien, voire juste avant les deuxièmes moyens de maintien, de manière à améliorer la séparation avant que les deuxièmes moyens de maintien ne viennent en contact avec la surface exposée du reste de la spirale. Dit autrement, les moyens d'aide sont prévus, dans le sens de déplacement des tiges du reste de la spirale, entre lesdits moyens de mise en rotation de la spirale et lesdits deuxièmes moyens de maintien.

Préférentiellement, les moyens d'aide à la séparation comprennent des pointes, des dents, des brosses ou des palettes en métal, en cuir ou en caoutchouc.

Les moyens d'aide sont configurés pour pouvoir attraper les tiges végétales destinées à être séparées de la spirale et éventuellement entremêlées avec la spirale, et pouvoir les détacher de la spirale. Les moyens d'aide comportent ainsi des éléments configurés pour attraper les tiges végétales avant qu'elles ne soient entraînées avec le reste de la spirale au-delà des deuxièmes moyens de maintien, et pour leur permettre d'être ensuite maintenues par les premiers moyens de maintien avec le reste de la nappe continue.

Préférentiellement, la balle agricole peut être dépourvue de ficelle enroulée le long de la spirale, entre différentes couches de la nappe continue.

Préférentiellement, la balle agricole comprend au moins une première ficelle enroulée le long de la spirale entre différentes couches de la nappe continue, de préférence dans une zone médiane de chaque couche de la nappe continue, et la machine de déroulage comprend également des premiers moyens d'entraînement de la première ficelle montés adjacents, par exemple au-dessus, des premiers moyens de maintien de la nappe continue, de manière à séparer la première ficelle et le reste de la spirale lors du déroulage.

La machine de déroulage selon la présente invention peut également utiliser la ou les ficelles positionnées au sein de la balle agricole, afin d'améliorer et rendre plus efficace la séparation entre la nappe continue et le reste de la spirale. Ainsi, la machine de déroulage peut également comprendre des premiers moyens d'entraînement d'une ficelle, montés du côté des premiers moyens de maintien de la nappe continue, de manière à ce que la ficelle entraînée par les premiers moyens d'entraînement puisse exercer une force de séparation entre la nappe continue et le reste de la spirale, ainsi qu'une force de maintien des tiges séparées dans la nappe continue, au moment et après la séparation.

Préférentiellement, la balle agricole comprend au moins une deuxième ficelle enroulée le long de la spirale entre différentes couches de la nappe continue, de préférence dans une zone médiane de chaque couche de la nappe continue, et la machine de déroulage comprend également des deuxièmes moyens d'entraînement de la deuxième ficelle montés en amont, dans le sens de rotation de la spirale lors du déroulage, du point de séparation entre la nappe continue et la spirale restante, par exemple en-dessous des premiers moyens de maintien de la nappe continue, de manière à ce que la deuxième ficelle entoure la spirale restante lors du déroulage. Dit autrement, la machine de déroulage comprend des deuxièmes moyens d'entraînement de la deuxième ficelle montés, dans le sens de rotation de la spirale lors du déroulage, entre lesdits deuxièmes moyens de maintien et ledit point de séparation, par exemple entre lesdits deuxièmes moyens de maintien et lesdits moyens de mise en rotation, de manière à ce que la deuxième ficelle entoure la spirale restante lors du déroulage.

La machine de déroulage selon la présente invention peut également utiliser une seconde ficelle positionnée au sein de la balle agricole, afin d'améliorer la tenue du reste de la spirale après séparation de la nappe continue. Ainsi, la machine de déroulage peut également comprendre des deuxièmes moyens d'entraînement d'une ficelle, montés en aval du point de séparation, de manière à ce que la deuxième ficelle puisse maintenir en place les tiges végétales de la surface de la spirale restante, en particulier après la séparation de la nappe continue.

Préférentiellement, les deuxièmes moyens de maintien comportent au moins un élément souple longitudinal, par exemple une ou plusieurs courroies, de préférence fermées sur elles-mêmes, et plusieurs moyens de guidage, configurés pour positionner ledit élément souple longitudinal sur au moins une portion supérieure de la périphérie de la spirale, de préférence sur au moins une moitié supérieure de la périphérie de la spirale.

Les deuxièmes moyens de maintien peuvent être configurés pour venir entourer partiellement la spirale restante. De tels deuxièmes moyens de maintien permettent donc de garder la spirale restante à la bonne position et de la stabiliser. De plus, lorsque l'élément souple longitudinal présente une largeur sensiblement égale ou supérieure à la largeur de la balle agricole, de tels deuxièmes moyens de maintien peuvent également contenir et garder les poussières dans la spirale restante, et éviter leur mise en suspension dans l'air, en particulier en aval des moyens d'aide à la séparation. En particulier, et dans un mode de réalisation, les deuxièmes moyens de maintien peuvent comprendre les moyens de mise en rotation de la spirale. On comprend donc que les deuxièmes moyens de maintien sont destinés à venir entourer la spirale restante, afin de contrôler sa position et éventuellement son mouvement, voire limiter la libération de poussières lors de sa rotation.

En particulier, les deuxièmes moyens de maintien peuvent être similaires aux moyens de pressage utilisés dans les machines enrouleuses, pour enrouler les tiges végétales sous forme de balle agricole, sauf que les deuxièmes moyens de maintien n'ont pas besoin d'exercer une force de pression sur les tiges végétales, mais uniquement de les entourer partiellement.

Préférentiellement, ledit élément souple longitudinal s'étend sur la spirale, à proximité du point de séparation jusqu'aux moyens de mise en rotation.

Dans un tel mode de réalisation, l'élément souple longitudinal est configuré pour recouvrir la surface libre de la spirale restante, entre les moyens d'aide à la séparation et les moyens de mise en rotation. Il s'agit de la portion pendant laquelle la surface externe de la spirale restante décrit uniquement un mouvement de rotation. L'élément souple longitudinal peut alors venir recouvrir la spirale restante sur une telle portion, pour la maintenir et éventuellement pour la mettre en rotation et/ou confiner les poussières.

Préférentiellement, les deuxièmes moyens de maintien comprennent également des moyens de mise en tension, par exemple mobiles, configurés pour maintenir l'élément souple longitudinal en contact avec une portion de la périphérie de la spirale tout au long du déroulage de ladite spirale, en particulier lorsque le diamètre de la spirale diminue.

Au fur et à mesure du déroulage de la balle agricole, la spirale restante présente dans la machine de déroulage va présenter un diamètre qui va diminuer. Les moyens de mise en tension sont ainsi configurés pour modifier la forme de l'élément souple longitudinal afin de permettre à celui-ci de rester au contact avec la surface périphérique de la spirale. On s'assure ainsi du bon contrôle du maintien en position de la spirale, et éventuellement de la mise en rotation et du confinement des poussières, tout au long du déroulage.

Préférentiellement, les deuxièmes moyens de maintien sont configurés pour : s'escamoter au-dessus de la spirale, par exemple par rotation, de manière à permettre l'entrée d'une nouvelle balle agricole sur les moyens de mise en rotation, puis se positionner autour de la balle agricole, par exemple par rotation, de manière à maintenir celle-ci sur les moyens de mise en rotation.

Les différents moyens de la machine de déroulage, à savoir les moyens de mise en rotation et les deuxièmes moyens de maintien, peuvent notamment entourer presque entièrement la périphérie de la balle agricole. Afin de positionner une nouvelle balle agricole, il pourrait être envisagé de l'acheminer le long de l'axe de rotation du déroulage, puisque la balle agricole n'est pas nécessairement recouverte au niveau de ses faces latérales. Alternativement, selon le présent mode de réalisation, la machine de déroulage prévoit des deuxièmes moyens de maintien montés de manière escamotable sur la machine. Ainsi, lorsqu'une balle agricole doit être déroulée, les deuxièmes moyens de maintien s'escamotent, par exemple par rotation vers le haut, de manière à laisser suffisamment de place à la balle agricole pour venir se positionner sur les moyens de mise en rotation par exemple. Une fois la balle agricole positionnée, les deuxièmes moyens de maintien peuvent alors être repositionnés dans leur configuration active de manière à ce que l'élément souple longitudinal vienne en contact avec la périphérie de la balle agricole ainsi positionnée.

Préférentiellement, la machine comprend également des moyens de commande pour commander les différents moyens de la machine de déroulage, à distance de la machine ou à l'abri des particules pouvant s'en dégager lors du déroulage de la balle agricole.

La machine de déroulage permettant de contrôler la position et la rotation de la balle agricole pendant son déroulage, ainsi que la séparation de la nappe continue du reste de la spirale, il est alors possible de prévoir des moyens de commande permettant de régler chacun des moyens de la machine, de préférence à distance, de manière à adapter et optimiser son fonctionnement en fonction de la situation, par exemple en cas de casse d'une ficelle ou en cas de détection de tensions au niveau du point de séparation. La commande à distance de la machine de déroulage permet surtout d'éloigner la ou les personnes commandant la machine, de la balle agricole en cours de déroulage, et donc de protéger la ou les personnes en charge du déroulage. Par exemple, les moyens de commande peuvent être prévus dans un espace clos isolé, ou bien à une distance importante de la machine agricole, ou bien de l'autre côté d'une paroi de protection. On permet ainsi aux personnes en charge du déroulage de travailler dans des conditions de sécurité améliorées et également plus confortables.

Préférentiellement, lesdits moyens de mise en rotation de la spirale comprennent un support, par exemple une ou plusieurs courroies ou un tapis qui sont mis en rotation, notamment par un ou plusieurs rouleaux, et ledit support s'étend au-delà dudit point de séparation, notamment en direction, voire en regard, desdits premiers moyens de maintien, de manière à acheminer la nappe continue de fibres végétales sur ledit support après sa séparation du reste de la spirale.

Il est ainsi plus efficace d'acheminer les tiges végétales séparées de la spirale restante, vers le reste de l'installation de teillage, tout en limitant les chutes de tiges ou de poussières en-dessous de l'installation.

### Brève description des dessins

[Fig. 1] La figure 1 représente une vue schématique d'une machine de déroulage selon l'invention, dans une configuration active ; et
[Fig. 2] La figure 2 représente une vue schématique de la machine représentée à la figure 1, dans une configuration escamotée.

### Description des modes de réalisation

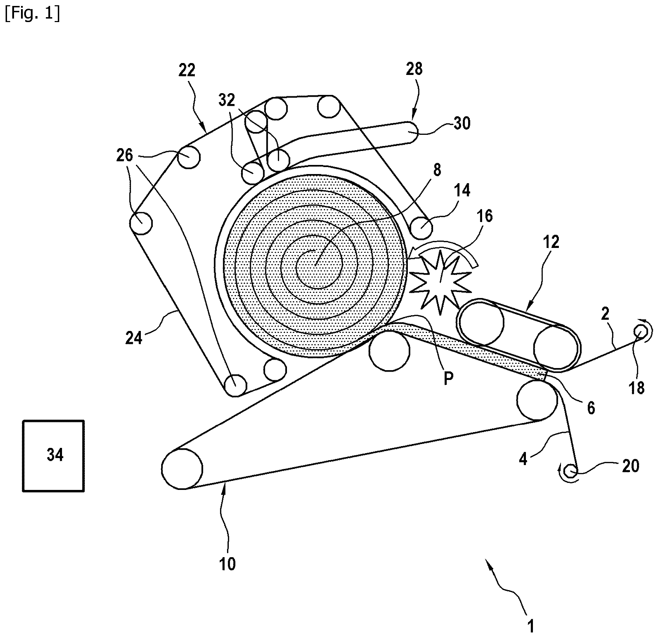

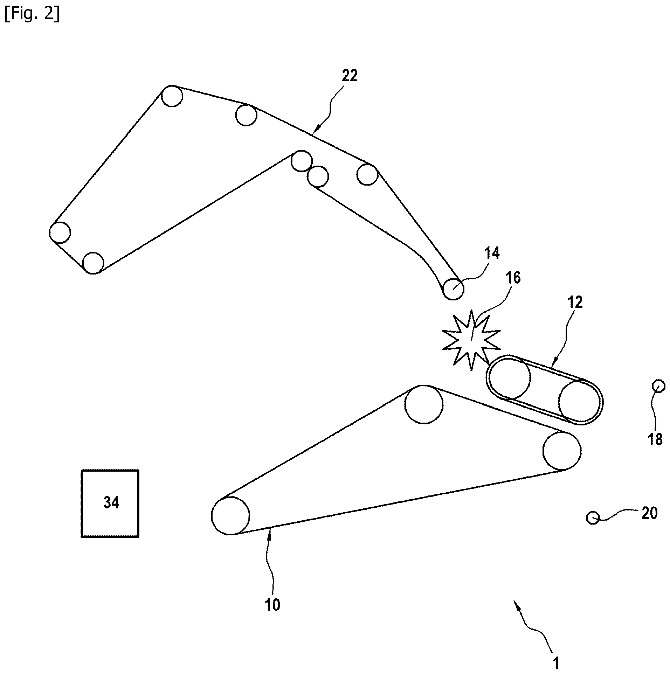

Les figures 1 et 2 illustrent de manière schématique un exemple de machine de déroulage 1 selon l'invention. Le but de la machine de déroulage 1 est de permettre le déroulage d'une balle agricole en une nappe continue de tiges végétales.

En particulier, la machine 1 selon la présente invention est configurée pour dérouler une balle agricole obtenue par enroulement d'une nappe continue de tiges végétales, par exemple issue d'un andain. La nappe continue est enroulée sur elle-même de manière à obtenir une spirale qui est ensuite fermée lorsque celle-ci présente une taille déterminée ou voulue. Afin de faciliter le déroulage de la balle agricole, une ou plusieurs ficelles, peuvent être ajoutées à la nappe continue préalablement ou pendant son enroulement. La ou les ficelles sont ainsi positionnées sur une face de la nappe continue enroulée, et délimitent les différentes couches de la spirale formée par la nappe continue enroulée.

Alternativement, la balle agricole peut être dépourvue de ficelle enroulée le long de la spirale, entre différentes couches de la nappe continue.

Dans l'exemple décrit ci-dessous, on considère que la balle agricole à dérouler comporte une première ficelle 2 et une deuxième ficelle 4 parallèles et positionnées de manière adjacente sur la nappe continue, le long de la spirale de la balle agricole, dans une zone médiane de la nappe continue.

Ainsi, au cours du déroulage, la balle agricole va être scindée en deux parties : une nappe continue 6 de tiges végétales résultant du déroulage partiel de la balle agricole et destinée à être traitée, notamment par une teilleuse, et une spirale 8 restant encore dans la machine 1 suite au déroulage partiel de la balle agricole. La nappe continue 6 et la spirale 8 sont reliées entre elles au niveau d'un point P de séparation, à partir duquel la nappe continue 6 s'éloigne de la spirale 8.

Dans cet exemple de mode de réalisation, la machine de déroulage 1 comprend tout d'abord un support formé, dans le cas présent, par un tapis porteur 10 sur lequel la balle agricole est destinée à venir se positionner en vue de son déroulage. Le tapis porteur 10 est avantageusement motorisé de manière amener la balle agricole à l'endroit voulu, une fois celle-ci positionnée sur le tapis porteur 10.

Par ailleurs, le tapis porteur 10 est également configuré pour mettre en rotation la balle agricole, lors de son déroulage. Le tapis porteur 10 peut ainsi comprendre une ou plusieurs courroies ou bien juste un tapis, destinées à supporter la balle agricole, et un ou plusieurs rouleaux sur lesquels sont montées la ou les courroies. Une fois la balle agricole positionnée sur le tapis porteur 10 et bloquée en position, par exemple par un élément formant butée tel un rouleau comme décrit plus bas, le déplacement du tapis porteur 10 permet alors de faire tourner la balle agricole sur elle-même.

On comprend alors que le tapis porteur 10 comprend des moyens de mise en rotation de la balle agricole, et donc de la spirale 8 lors du déroulage.

La machine de déroulage 1 comprend également des premiers moyens de maintien 12 de la nappe continue. Les premiers moyens de maintien 12 permettent de maintenir ensemble les tiges végétales formant la nappe continue 8 qui ont été séparées du reste de la spirale 8, afin de les éloigner de la spirale 8 lors du déroulage de la balle agricole, et de les acheminer vers un système de traitement de la nappe continue, de préférence vers une teilleuse (non représentée).

Les premiers moyens de maintien 12 peuvent comprendre des moyens de support destinées à entraîner la nappe continue 6, par exemple des courroies mobiles, et idéalement des moyens de pincement, par exemple des courroies mobiles, montés en regard des moyens de support et destinés à venir enserrer, avec les moyens de support, la nappe continue 6. La nappe continue 6 est alors agrippée par les premiers moyens de maintien 12 qui peuvent la maintenir et l'entraîner vers le système de traitement.

Afin d'empêcher la spirale 8, ou au moins une partie des tiges exposées de la spirale 8, d'être entraînée par les premiers moyens de maintien 12, la machine 1 comporte également des deuxièmes moyens de maintien 22 avec, notamment, un rouleau de retenue 14 formant butée pour la spirale 8 et permettant également guider la périphérie de la spirale 8 découverte par la séparation de la nappe continue 6. Le rouleau de retenue 14 peut être positionné à proximité et en aval du point de séparation P, dans le sens de déplacement des tiges restant dans la spirale.

Le rouleau de retenue 14 permet notamment d'entraîner le reste de la spirale 8 d'un côté, tandis que la nappe continue 6 est entraînée de l'autre côté par les premiers moyens de maintien 12.

La combinaison des premiers moyens de maintien 12, du rouleau de retenue 14 et des deuxièmes moyens de maintien 22 permet donc d'obtenir une séparation efficace entre la nappe continue 6 et la spirale 8, chaque partie étant guidée et maintenue par des moyens correspondants de la machine 1. On limite ainsi les difficultés de séparation, notamment en permettant l'application d'une force entre la nappe continue 6 et la spirale 8, permettant, le cas échéant, la séparation de tiges végétales entremêlées.

Afin d'améliorer la séparation, la machine 1 peut également comprendre des moyens d'aide à la séparation 16. Les moyens d'aide 16 peuvent être montés avantageusement à proximité du point de séparation P, entre les premiers moyens de maintien 12 et le rouleau de retenue 14, et sont configurés pour venir directement agir à la surface de la spirale 8 pour venir y enlever les éventuelles tiges végétales susceptibles d'y rester accrochées.

Les moyens d'aide 16 peuvent ainsi comprendre un rouleau avec une surface agrippante, par exemple avec des pointes, des dents, des brosses ou des palettes, pour venir attraper les tiges partiellement séparées de la périphérie de la spirale, et les détacher complètement pour en permettre l'entraînement par les premiers moyens de maintien 12. Avantageusement, le rouleau des moyens d'aide 16 est entraîné en rotation dans le même sens que la spirale 8.

La machine 1 peut également exploiter la présence des ficelles 2, 4 pour faciliter et améliorer la séparation de la nappe continue 6 et de la spirale 8. Par exemple, des premiers moyens d'entraînement 18 peuvent être prévus pour entraîner la première ficelle 2. Les premiers moyens d'entraînement 18 peuvent comprendre un rouleau monté en rotation pour venir y enrouler autour la première ficelle 2 au fur et à mesure du déroulage de la balle agricole.

Avantageusement, les premiers moyens d'entraînement 18 sont positionnés en aval des premiers moyens de maintien 12, et sont configurés pour enrouler la première ficelle de manière à guider les tiges végétales de la nappe continue 6 du point P de séparation vers les premiers moyens de maintien 12.

De même, la machine 1 peut également comprendre des deuxièmes moyens d'entraînement 20 configurés pour entraîner la deuxième ficelle 4. Les deuxièmes moyens d'entraînement 20 peuvent comprendre un rouleau monté en rotation pour venir y enrouler autour la deuxième ficelle 4 au fur et à mesure du déroulage de la balle agricole.

Avantageusement, les deuxièmes moyens d'entraînement 20 sont positionnés en aval des moyens 10 de mise en rotation de la spirale, par exemple au niveau des premiers moyens de maintien 12, et sont configurés pour enrouler la deuxième ficelle afin d'appliquer une pression à la surface de la périphérie de la spirale 8 après le point de séparation P. Les deuxièmes moyens d'entraînement 20 permettent donc de guider les tiges végétales de la spirale 8 du point P de séparation vers le rouleau de retenue 14 et pendant encore une rotation, de 360°, de la balle agricole.

Les deuxièmes moyens de maintien 22 peuvent avantageusement comprendre, en plus du rouleau de retenue 14, d'autres rouleaux et/ou des courroies, afin de former, par exemple, une sorte de cage autour de la balle agricole, puis de la spirale 8 durant son déroulage, afin de la maintenir en position, et éventuellement limiter la libération de poussières.

Les deuxièmes moyens de maintien 22 comprennent ainsi un élément souple longitudinal 24, par exemple une ou plusieurs courroies fermées sur elles-mêmes, des moyens de guidage 26, et éventuellement d'entraînement, par exemple des rouleaux qui, en plus du rouleau de retenue 14, viennent également guider, voire entraîner, l'élément souple longitudinal 24. L'élément souple longitudinal 24 est monté en rotation sur lesdits moyens de guidage, et éventuellement d'entraînement, 26 et sur le rouleau de retenue 14. Les moyens de guidage 26 sont ainsi positionnés de manière à ce que l'élément souple 24 vienne en contact avec une partie de la surface périphérique de la spirale 8. Le rouleau de retenue 14 guide également l'élément souple 24, afin de le guider au plus près du point de séparation P.

Par ailleurs, la taille de la spirale 8 diminuant au fur et à mesure du déroulage, les deuxièmes moyens de maintien 22 comportent également des moyens de mise en tension 28 (voir figure 1) destinés à maintenir l'élément souple 24 contre la surface de la spirale 8 tout au long du déroulage. Les moyens de mise en tension 28 peuvent par exemple comporter un bras mobile 30 sur lequel sont montés un ou plusieurs moyens de guidage mobiles 32 configurés pour guider, avec les moyens de guidage 26, l'élément souple 24. Ainsi, au fur et à mesure du déroulage, les moyens de guidage mobiles 32 se déplacent, par exemple à proximité immédiate de la périphérie de la spirale 8, afin d'y maintenir l'élément souple 24.

Les deuxièmes moyens de maintien 22 sont également configurés pour s'escamoter lors du chargement d'une nouvelle balle agricole. Ainsi, afin de permettre l'entrée du balle agricole dans la cage formée par les deuxièmes moyens de maintien 22, ceux-ci peuvent pivoter vers le haut, jusqu'à une configuration escamotée dans laquelle l'espace libre entre le tapis porteur 10 et les deuxièmes moyens de maintien 22 est supérieur ou égal au diamètre de la balle agricole. Une fois la balle agricole positionnée dans la machine 1, les deuxièmes moyens de maintien 22 peuvent alors redescendre en position active en venant l'entourer.

On comprend que la machine 1 comporte différents moyens mis en rotation pour remplir différentes fonctions lors du déroulage de la balle agricole. Ainsi, le tapis porteur 10, les premiers moyens de maintien 12, les premiers et deuxièmes moyens d'entraînement 18, 20, les moyens d'aide à la séparation 16, et les deuxièmes moyens de maintien 22 sont entraînés en rotation simultanément pendant le déroulage de la balle agricole. Afin de contrôler et limiter les différentes tensions ou contraintes pouvant apparaître au sein de la nappe continue 6 ou de la spirale 8 pendant le déroulage, les différents moyens mentionnés précédemment peuvent être synchronisés.

La machine 1 peut enfin comprendre des moyens de commande 34 configurés pour commander un ou plusieurs, idéalement tous, les moyens de la machine 1, et en particulier les moyens entraînés en rotation permettant le déroulage de la balle agricole. Grâce aux moyens de commande 34, il est possible de commander les différentes étapes de la machine 1 à distance, et de s'assurer de son bon fonctionnement.

Ainsi, grâce à la machine de déroulage selon la présente invention, il devient possible de dérouler une balle agricole en limitant les actions humaines directement sur la machine, et de limiter également la libération de poussières dans l'air. Les opérateurs sont ainsi mieux protégés, voire complètement protégés, et peuvent commander la machine dans des conditions plus sécurisées et plus confortables, par exemple à distance.

## Revendications

1. Machine de déroulage (1) d'une balle agricole obtenue par enroulement en spirale d'une nappe continue de tiges végétales préalablement prélevée sur le sol, la machine (1) étant configurée pour détacher une nappe continue (6) de tiges végétales du reste de la spirale (8), et comportant :
- des moyens de mise en rotation (10) de la spirale autour d'une direction sensiblement parallèle à un axe de la spirale, par exemple un tapis porteur, **caractérisée en ce que** la machine (1) comprend également :
- des premiers moyens de maintien (12) de la nappe continue (6) de tiges végétales, pour acheminer la nappe continue (6) vers un ou plusieurs moyens de traitement, les premiers moyens de maintien (12) étant configurés pour venir en contact avec au moins une partie de la surface de la nappe continue exposée par la séparation entre la nappe continue et le reste de la spirale, et
- des deuxièmes moyens de maintien (22) du reste de la spirale, pour maintenir le reste de la spirale, notamment sur les moyens de mise en rotation (10), les deuxièmes moyens de maintien (22) étant configurés pour venir en contact avec au moins une partie de la surface du reste de la spirale (8) exposée par la séparation de la nappe continue (6),
un point de séparation entre la nappe continue et le reste de la spirale étant positionné, dans le sens de déplacement des tiges du reste de la spirale et de la nappe continue, en amont desdits premiers et deuxièmes moyens de maintien (12, 22).

2. Machine de déroulage (1) selon la revendication 1, dans laquelle les deuxièmes moyens de maintien (22) sont synchronisés avec les moyens de mise en rotation (10) de la spirale.

3. Machine de déroulage (1) selon la revendication 1 ou 2, comprenant également des moyens d'aide à la séparation (16), montés, dans le sens de déplacement des tiges du reste de la spirale et de la nappe continue, entre le point de séparation (P) et les premiers et deuxièmes moyens de maintien (12, 22), par exemple entre les premiers moyens de maintien (12) et les deuxièmes moyens de maintien (22).

4. Machine de déroulage (1) selon la revendication précédente, dans laquelle les moyens d'aide à la séparation (16) comprennent des pointes, des dents, des brosses ou des palettes en métal, en cuir ou en caoutchouc.

5. Machine de déroulage (1) selon l'une quelconque des revendications précédentes, dans laquelle la balle agricole comprend au moins une première ficelle (2) enroulée le long de la spirale (8) entre différentes couches de la nappe continue, de préférence dans une zone médiane de chaque couche de la nappe continue, dans laquelle la machine (1) comprend également des premiers moyens d'entraînement (18) de la première ficelle (2) montés adjacents, par exemple au-dessus, des premiers moyens de maintien (12) de la nappe continue, de manière à séparer la première ficelle (2) et le reste de la spirale (8) lors du déroulage.

6. Machine de déroulage (1) selon la revendication 5, dans laquelle la balle agricole comprend au moins une deuxième ficelle (4) enroulée le long de la spirale (8) entre différentes couches de la nappe continue, de préférence dans une zone médiane de chaque couche de la nappe continue, dans laquelle la machine (1) comprend également des deuxièmes moyens d'entraînement (20) de la deuxième ficelle (4) montés en amont, dans le sens de rotation de la spirale lors du déroulage, du point de séparation (P) entre la nappe continue (6) et le reste de la spirale (8), par exemple en-dessous des premiers moyens de maintien (12) de la nappe continue, de manière à ce que la deuxième ficelle entoure la spirale restante lors du déroulage.

7. Machine de déroulage (1) selon l'une quelconque des revendications précédentes, dans laquelle les deuxièmes moyens de maintien (22) comportent au moins un élément souple longitudinal (24), par exemple une ou plusieurs courroies, de préférence fermées sur elles-mêmes, et plusieurs moyens de guidage (26) configurés pour positionner ledit élément souple longitudinal (24) sur au moins une portion de la périphérie de la spirale (8), de préférence sur au moins une moitié supérieure de la périphérie de la spirale (8).

8. Machine de déroulage (1) selon la revendication précédente, dans laquelle ledit élément souple longitudinal (24) s'étend sur la spirale (8), à proximité du le point de séparation jusqu'aux moyens de mise en rotation (10).

9. Machine de déroulage (1) selon la revendication 7 ou 8, dans laquelle les deuxièmes moyens de maintien (22) comprennent également des moyens de mise en tension (28), par exemple mobiles, configurés pour maintenir l'élément souple longitudinal (24) en contact avec une portion de la périphérie de la spirale (8) tout au long du déroulage de ladite spirale, en particulier lorsque le diamètre de la spirale diminue.

10. Machine de déroulage (1) selon la revendication 7, 8 ou 9, dans laquelle les deuxièmes moyens de maintien (22) sont configurés pour : s'escamoter au-dessus de la spirale (8), par exemple par rotation, de manière à permettre l'entrée d'une nouvelle balle agricole sur les moyens de mise en rotation (10), puis se positionner autour de la balle agricole, par exemple par rotation, de manière à maintenir celle-ci sur les moyens de mise en rotation (10).

11. Machine de déroulage (1) selon la revendication 7, 8, 9 ou 10, comprenant également des moyens de commande (34) pour commander les différents moyens de la machine de déroulage (1), à distance de la machine ou à l'abri des particules pouvant s'en dégager lors du déroulage de la balle agricole.
